Europäisches Patentamt

European Patent Office

Office européen des brevets

(19)

(11) Numéro de publication: **0 066 496**
**B1**

(12) **FASCICULE DE BREVET EUROPEEN**

(45) Date de publication du fascicule du brevet:
**21.08.85**

(51) Int. Cl.⁴: **G 02 B 5/32,** G 03 H 1/04,
H 04 N 5/72

(21) Numéro de dépôt: **82400900.5**

(22) Date de dépôt: **14.05.82**

(54) **Procédé de réalisation d'un filtre optique à microvolets et utilisation pour un indicateur cathodique aéroporté.**

(30) Priorité: **22.05.81 FR 8110251**

(43) Date de publication de la demande:
**08.12.82 Bulletin 82/49**

(45) Mention de la délivrance du brevet:
**21.08.85 Bulletin 85/34**

(84) Etats contractants désignés:
**DE GB**

(56) Documents cités:
**EP - A - 0 007 039**
**FR - A - 2 279 122**
**FR - A - 2 447 045**
**GB - A - 1 574 351**
**US - A - 3 653 138**
**US - A - 3 675 990**
**US - A - 4 261 635**

**IBM TECHNICAL DISCLOSURE BULLETIN, vol. 13, no.**
**12, mai 1971, pages 3687-3690, New York (USA); E.G.**
**LEAN et al.: "Device for making high-resolution**
**interdigital transducers"**

(73) Titulaire: **THOMSON-CSF, 173, Boulevard Haussmann,**
**F-75379 Paris Cedex 08 (FR)**

(72) Inventeur: **Meyzonnette, Jean-Louis, THOMSON-CSF**
**SCPI 173, bld Haussmann, F-75379 Paris Cedex 08 (FR)**

(74) Mandataire: **Trocellier, Roger et al, THOMSON-CSF**
**SCPI 173, Bld Haussmann, F-75379 Paris Cedex 08 (FR)**

## Description

La présente invention concerne un procédé de réalisation d'un filtre optique à microvolets encore appelé filtre directionnel ou filtre directif, qui permet d'améliorer le contraste de visualisation sous forte ambiance lumineuse. L'invention se rapporte également à l'utilisation d'un tel procédé pour constituer un filtre directif destiné à équiper un dispositif indicateur aéroporté.

Lors de la présentation d'informations sur écrans de tubes cathodiques ou sur tout autre dispositif plan de présentation, l'environnement impose, dans certains cas, des conditions d'observations qui peuvent nuire à la détection par l'observateur des informations présentées.

Un premier cas est le problème de la visualisation dans un environnement lumineux extrêmement élevé qui s'accompagne, généralement, d'une perte de contraste des informations lumineuses par rapport au found de l'écran cathodique.

Une seconde situation se présente lorsqu'on veut diminuer l'énergie lumineuse émise par un affichage, qui peut être détectée par un observateur étranger, et ceci, sans diminution de la luminance des informations présentées.

Ces deux aspects apparemment distincts peuvent trouver leur solution dans l'interposition d'un filtre directionnel entre le système d'affichage et l'observateur. Il en résulte pour l'observateur un champ ou angle de vision limité et de valeur déterminée de l'écran de visualisation.

Il est connu, notamment par le brevet US-A-3 653 138, de réaliser un tel filtre directif avec une feuille de plastique très mince comportant dans sa masse de minuscules volets étroitement serrés. Le film agit comme un petit store vénitien et améliore la visibilité de différents moyen d'affichage. Utilisé devant des sources de lumière, il assure un meilleur contraste, une réduction des reflets et permet d'orienter les angles de vision selon un axe horizontal ou vertical. Il peut être appliqué à des appareils qui utilisent des diodes électroluminescentes ou des cristaux liquides, ainsi qu'aux systèmes d'affichage à tubes cathodiques.

Les microvolets, ainsi appelés car de très faible dimension, sont disposés dans un matériau de base du filtre, tel que de l'acétobutyrate de cellulose, pour y former un réseau, ou deux réseaux superposés et croisés respectivement à 90°. Cette dernière version permet de réduire le champ de vision dans deux plans orthogonaux au lieu d'un.

L'angle de vision est fonction du pas entre les microvolets et de leur hauteur qu'ils présentent dans le sens de la transmission lumineuse, c'est à dire selon l'épaisseur de la feuille. Pour des raisons de faisabilité et de standardisation de la fabrication, il est préférable de jouer sur le paramètre hauteur, c'est à dire sur la hauteur des microvolets pour faire varier l'angle de vision, plutôt que sur le paramètre pas entre microvolets. La valeur du pas est choisie généralement autour de 100 micromètres.

Il est connu par ailleurs, d'utiliser des techniques d'enregistrement holographique pour produire des éléments optiques holographiques produisant une sélection angulaire et/ou spectrale du rayonnent. Appliquées à réaliser la glace de vision d'un collimateur tête haute, ces techniques permettent d'optimiser les fonctions de réflexion de l'image collimatée et de transmission de l'image du paysage. On produit généralement un hologramme de phase qui réfléchit le rayonnement dont la bande spectrale correspond à celle de l'image collimatée, généralement le phosphore d'un écran cathodique, et qui arrête le rayonnement lumineux ambiant parasite par sélection angulaire en fonction de l'incidence. Pour de telles techniques on peut se rapporter, notamment, aux documents de brevet GB-A-1 574 351, US-A- 3 695 990 et FR-A- 2 447 045.

Un but de l'invention est d'obtenir un filtre optique à microvolets selon un procédé de réalisation simple, économique, et qui présente une très grande souplesse pour ce qui est de faire varier les divers paramètres, et qui permet consécutivement de produire aisément des caractéristiques de directivité désirées pour le filtre.

A cet effet, l'invention a pour objet un procédé de réalisation d'un filtre optique à microvolets, tel que défini par la revendication 1.

Dans le procédé tel que défini ci-dessus, l'utilisation de techniques d'enregistrement holographique épais par transmission pour constituer un hologramme d'amplitude permet de produire des strates dont la pas d'espacement peut être rendu bien plus faible que celui des solutions connues à microvolets, ce qui accroît la résolutin, cette valeur restant toutefois largement supérieure aux longueurs d'ondes du spectre visible (0,4 à 0,7 µm), ce qui préserve la fonction de sélection directionnelle du rayonnement sans aucun aspect de sélection spectrale.

Les particularités de l'invention apparaîtront dans la description qui suit, donnée à titre d'exemple non limitatif à l'aide des figures annexées qui représentent:

Fig. 1, un schéma de rappel de la distribution typique des franges d'interférences en milieu épais pour un hologramme par transmission tel qu'utilisé dans le procédé selon la présente invention;

Fig. 2, un schéma d'un filtre optique à microvolets réalisé selon un procédé conforme à la présente invention;

Fig. 3 à 7, des schémas relatifs à divers modes de réalisation des réseaux épais par holographie;

Fig. 8, un diagramme relatif à un dispositif de mise en oeuvre du procédé de réalisation conforme à l'invention;

Fig. 9, un schéma d'une utilisation d'un filtre réalisè par le procédé selon l'invention dans un dispositif indicateur cathodique aéroporté;

Fig. 10 et 11, des schémas de détail relatifs à des réalisations selon la Fig. 9.

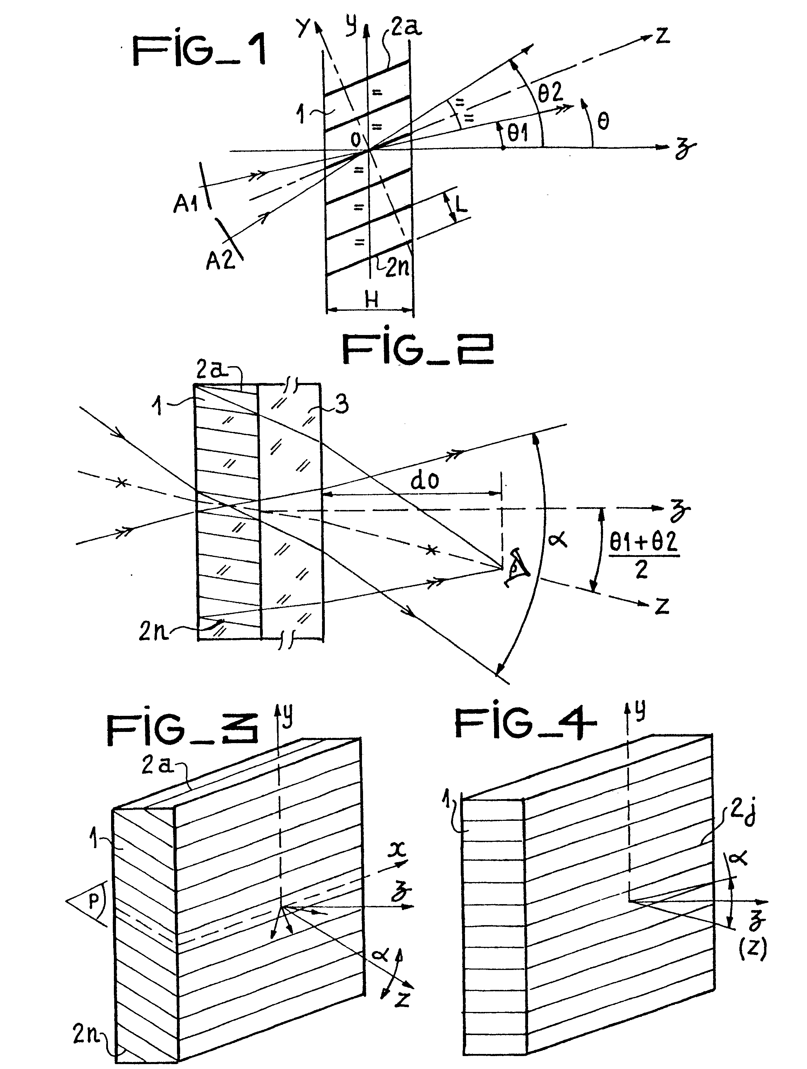

Dans un hologramme d'amplitude, les franges d'interférences sont enregistrées sous forme de modulation de la densité optique d'une surface photosensible, par exemple une émulsion au bromure d'argent. L'hologramme est dit par transmission lorsque l'information stockée est resituée sur l'onde transmise exclusivement. Les hologrammes en milieu épais peuvent être utilisés pour réaliser des hologrammes par transmission; les franges qui s'y trouvent stockées diffèrent des feuillets caractéristique des hologrammes en reflexion. En utilisant deux surfaces d'ondes planes A1 et A2 comme repréntées sur la Fig. 1 qui interfèrent dans un milieu photosensible 1, les surface d'ondes étant produites par des sources rayonnantes situées loin de l'hologramme (assimilables à deux sources ponctuelles à l'infini), les ondes réelles correspondent, sans erreur notable, à des portions d'ondes planes sur des distances très grandes devant la longueur d'onde $\lambda$. Les régions où l'intensité lumineuse est maximale sont des surfaces 2a à 2n formées de plans parallèles au plan bissecteur d'ondes incidentes à l'intérieur du matériau (plan XOZ perpendiculaire au plan de figure). Dans le milieu photosensible épais, ces plans 2a à 2n matérialisent ainsi une sorte de store vénitien fait de strates équidistantes dont l'écartement est donné par:

$$L = \lambda/2\sin\frac{\theta 1 - \theta 2}{2}$$

expression où $\lambda$ est la longueur d'onde et $\theta 1$ et $\theta 2$ les angles respectifs, avec la normale z au milieu photosensible, des directions des surfaces d'ondes A1 et A2.

Aprés traitement de l'émulsion photographique, c'est à dire la gélatine 1, par révélation, fixage et séchage, les surfaces 2a à 2n constituent des plans opaques qui sont utilisés selon l'invention pour constituer un réseau de microvolets et obtenir un filtre directionnel. En effet, en considérant d'un côté de la plaque transparente support de l'hologramme ainsi traitée, un objet lumineux formé par une ou plusieurs sources lumineuses (écran d'un tube cathodique, panneau d'affichage, monde extérieur, etc.) ne pourra être vu par un observateur situé de l'autre côté de la plaque que s'il se trouve dans un champ de vision limité et de valeur déterminée, comme représenté sur la Fig. 2.

Le champ est centré sur un axe de direction Z parallèle aux surfaces 2a à 2n et faisant avec la normale de direction z à la plaque 3, support de l'hologramme épais 1, un angle égal a

$$\frac{\theta 1 - \theta 2}{2},$$

l'ouverture $\alpha$ du champ est fonction de l'écartement L entre les strates ou microvolets et est fonction, également, du paramètre H correspondant à la hauteur des microvolets suivant la transmission optique, c'est à dire à l'épaisseur du milieu photosensible.

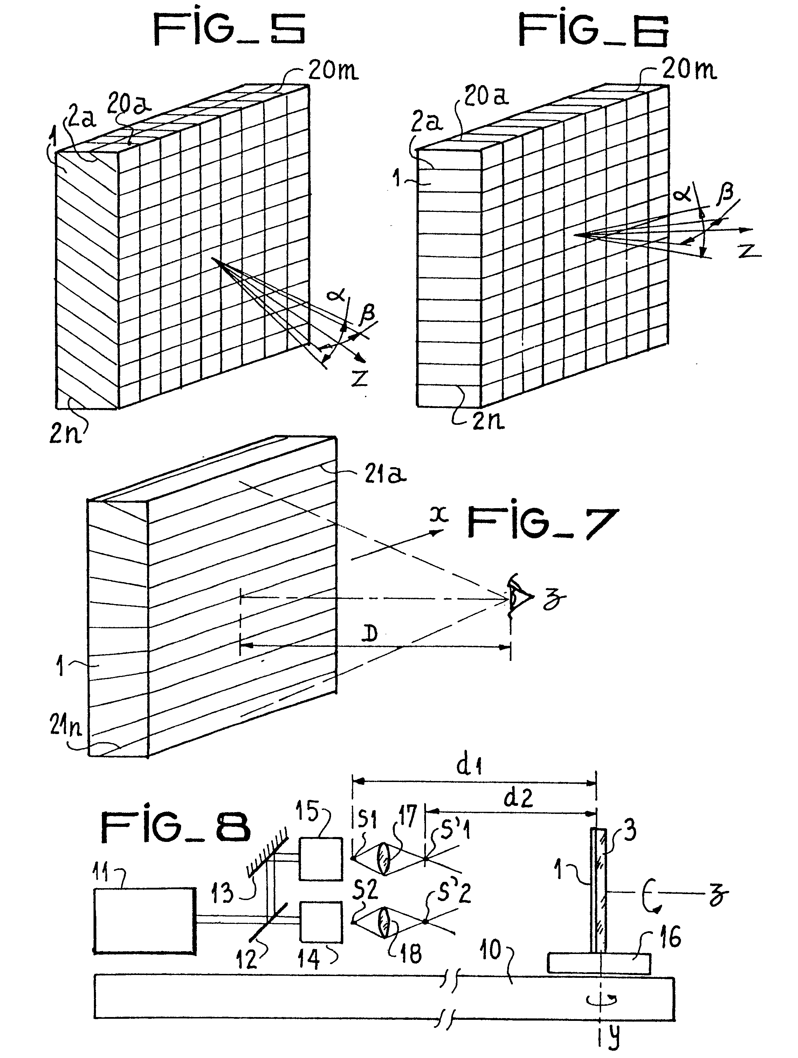

On se rend compte que l'angle de champ indiqué par $\alpha$ sur la Fig. 2 est fonction du pas L entre les microvolets et donc de la longueur d'onde $\lambda$ et des valeurs $\theta 1$ et $\theta 2$, c'est à dire des inclinaisons par rapport à la normale z des ondes interférentes. En choisissant les paramètres $\lambda$, $\theta 1$, $\theta 2$ et H, on peut définir un champ de direction et d'ouverture déterminées. L'épaisseur H du milieu sensible pour un hologramme épais peut être considérée à partir de 10 à 15 micromètres et croître pour aller jusqu'à plusieurs centaines de micromètres. Le support 3 sur lequel la couch photosensible 1 est déposée pour l'enregistrement du réseau, est constituée par une feuille de plastique transparente ou par un verre. Dans tous les cas, on choisira un matériau dont l'indice de réfraction correspond sensiblement à celui du milieu 1, en sorte d'adapter les indices et réduire le plus possible les pertes par reflexion, lors des traversées de milieux successifs. La Fig. 3 représente un enregistrement de strates 2a à 2n inclinées par rapport à la normale z et, dans le cas de la Fig. 4, les strates sont parallèles à la normale z. Suivant ces réalisations, l'observateur a une vision d'intensité maximale lorsque sa direction de visée est parallèle à la direction des strates et son champ de vision $\alpha$ est limité dans le plan vertical suivant la direction y. Il reste non limité sur l'autre direction x.

Ce n'est plus le cas dans réalisations selon les Fig. 5 ou 6 où l'on a formé deux réseaux de strates de directions croisées 2a à 2n et 20a à 20m. Ici, le champ de vision se trouve limité à une valeur $\alpha$ en site et à une valeur $\beta$ en gisement, c'est à dire en x, du fait de la présence du deuxième réseau.

Les montages à un réseau selon les Fig 3 ou 4 assurent une directivité dans un plan. Les montages à double réseau selon les Fig. 5 et 6 assurent la directivité selon un axe sensiblement. Enfin, on peut concevoir une réalisation de filtre directionnel pour un point de l'espace et son environnement immédiat; pour obtenir un tel résultat, il suffit de reprendre le montage selon la Fig. 5 ou 6 à deux réseaux et de le compléter par interposition d'une lentille holographique côté observateur, ou par une lentille de Fresnel ayant des caractéristiques optiques semblables. La vision sera assurée pour la position de l'œil au voisinage du foyer de la lentille. Ces solutions sont cependant de peu d'intérêt car complexes et onéreuses, un résultat équivalent est obtenu en modifiant le réseau, comme représenté à la Fig. 7 et en réalisant un système dit convergent. Dans a version représentée à un seul réseau, les strates 21a à 21n ne sont plus parallèles, mais présentent une inclinaison variable de part et d'autre de l'axe z, en sorte que les directions moyennes entre microvolets successifs se recoupent sensiblement au même point de l'axe z, point où doit se situer l'œil de l'observateur.

Le diagramme Fig. 8 représente schématiquement les moyens utilisés pour procéder à la réalisation d'un filtre directionnel, selon l'invention; ces moyens comportent un bâti 10 qui support une source laser 11 ayant en sortie un séparateur optique groupant un miroir semitransparent 12 et un miroir reflechissant 13 pour diviser en deux le faisceu émis; ces faisceaux sont repris par des filtres spatiaux optimisés 14 et 15 qui peuvent être constitués par des objectifs de microscope et grâce auxquels on produit des sources lumineuses ponctuelles S1 et S2 génératrices d'ondes sphériques. La plaque support 3 recouverte d'émulsion photosensible 1 est supportée par l'intermédiaire d' un organe 16 qui permet sa rotation selon les deux axes orthogonaux y et z. La rotation autour de l'axe y est utilisée pour ajuster à la valeur désirée le paramètre inclinaison des strates par rapport à la normale z. La rotation autour de l'axe z est utilisée pour effectuer une rotation de 90° dans le cas des Fig. 5 et 6 lorsque l'on veut produire deux réseaux croisés. Pour l'obtention d'un filtre convergent selon Fig. 7, il faut produire une inclinaison variable, et le montage est composé par deux lentilles cylindriques 17 et 18 grâce auxquelles les sources ponctuelles S1 et S2 sont transformées en deux sources linéaires S'1 et S'2 selon les lignes focales des lentilles 17 et 18 et permettent de produire une inclinaison variable des strates. Un dispositif non figuré est prévu pour déplacer selon la verticale y l'ensemble 13—15 relativement à l'ensemble 12—14, en sorte de jouer sur l'écartement des points source S1 et S2 et faire varier le pas L du réseau.

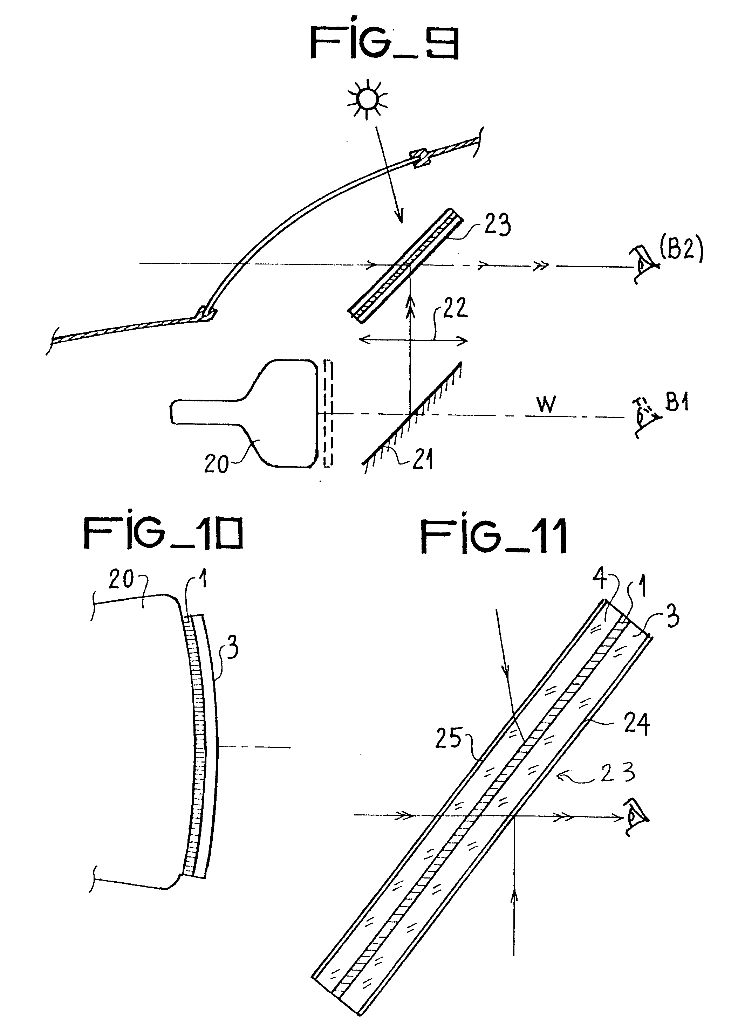

Du point de vue utilisation, de manière à protéger la couche 1, celle-ci sera de préférence montée en sandwich entre sa plaque support 3 et un élément extérieur pouvant être constitué par l'écran ou le panneau de visualisation que l'on désire observer. Sur la Fig. 9, on a représenté une utilisation envisageable sur du matériel aéroporté. Le pilote dont la position est bien déterminée dans le cockpit de l'avion, est amené à observer l'image d'un tube cathodique soit dirctement (position B1) dans le cas d'une visualisation dite tête basse ou, après collimation, dans le cas représenté (position B2) correspondant à une visualisation tête haute. Dans le premier cas l'axe W du tube est plus incliné que représenté sur la figure, car il doit correspondre à la positon réelle du pilote en B2 et le filtre directionnel 1 selon l'invention sera appliqué devant l'ecran du tube, comme indiqué sur le détail Fig. 10. Dans le montage tête haute, l'image de l'écran du tube 20 est refléchie par un miroir 21 et renvoyée à l'infini par une optique collimatrice 22, et elle est vue par le pilote après reflexion sur la glace semi-transparente 23. Le détail de cette glace est représenté sur la Fig. 11 qui montre le réseau de microvolets 1 disposé en sandwich entre deux lames de verre, dont l'une peut être constituée par une lame support de l'enregistrement 3 et la deuxième 4 être montée ultérieurement; la lame 3 comporte sur son autre face un dépôt semi-transparent 24 et la lame 4 un dépôt anti-reflets 25.

La description qui précède présente de nombreuses variantes conformes aux caractéristiques exposées et qui sond donc à inclure dans le cadre de l'invention. On citera, par exemple, dans le cadre du réseau convergent Fig. 7, la possibilité de réaliser un double réseau convergent, la version à un réseau de la Fig. 7 laissant libre le débattement de l'œil en x à la distance D determinée par les caractéristiques de convergence. Il y a lieu de condidérer également que le filtre directionnel peut également cumuler les propriétés de filtrage spectral selon toute technique connue. Le filtrage spectral peut être obtenau par le choix du matériau constituant la couche I ou l'élément support 3; le support peut être par exemple constitué par des verres connus sous la marque »SCHOTT«. Une autre manière connue de faire un filtre est de déposer sur l'une des faces du support 3 une couche transparente de très faible épaisseur pour produire un filtrage interférentiel, ou encore des dépôts plus épais de matériaux particuliers pour produire la sélection spectrale désirée.

Comme on peut s'en rendre compte, le réseau régulier de microvolets obtenu par holographie selon une techchnique connue en soi, est utilisé selon l'invention non pour stocker une information d'objet lumineux, mais pour créer les microvolets et conduire à une nouvelle utilisation de l'hologramme. Dans ce concept, l'objet lumineux est réduit à un point. Avec un laser de longueur d'onde de 0,6 micromètre, on peut envisager de produire des strates ayant un pas variant de 5 à quelques dizaines de micrométres. Ces valeurs de pas sont notablement plus élevées que les longueurs d'ondes des radiations du spectre visible qui se situent entre 0,4 et 0,7 μm environ. De ce fait, l'hologramme épais formé de strates ne joue aucun rôle sélectif en fréquence; le rayonnement lumineux, quelle que soit sa longueur d'onde et dont la direction est telle qu'il ne vient pas frapper les strates traverse le filtre, dans le cas contraire il est absorbé. Les performances photométriques et la résolution sont donc plus élevées que dans les dispositifs mécaniques connus; la résolution est définie par le pas du réseau, plus le pas est petit et plus la résolution du dispositif est élevée. En outre, il faut considérer que ce réseau est de conception simple, d'exécution rapide, les valeurs angulaires sont aisées à obtenir par un réglage simple et le produit obtenu est relativement économique.

## Revendications

1. Procédé de réalisation d'un filtre optique à microvolets constituant un filtre directif, du type formé d'une plaque transparente (3) supportant au moins un réseau de microvolets opaques (2q—2n; 20a—20m; 21q—21n) disposés en sorte que l'observation par transmission lumineuse à travers le filtre est réduite à un champ de vision délimité par le pas d'espacement (L) des microvolets et leur hauteur (H) selon le sens de la transmission, ledit procédé étant caractérisé par les étapes suivantes:

— dépôt d'une couche photosensible épaisse (1) sur l'une des grandes faces de ladite plaque support transparente (3); et,
— enregistrement holographique d'un point lumineux dans ladite couche (1), selon la technique d'holographie épaisse par transmission, de manière à y former un hologramme d'amplitude épais par transmission constitué d'au moins un reseau de strates opaques s'étendant sur une hauteur (H) correspondant à l'épaisseur de la couche, et selon un pas d'espacement (L) notablement plus élevé que les longueurs d'ondes du spectre visible, lesdits strates opaques constituant lesdits microvolets (2a—2n; 20a—20m; 21a—21n).

2. Procédé selon la revendication 1, caractérisé en ce que ledit enregistrement holographique est opéré de facon à produire des microvolets (2a—2n; 20a—20m) parallèles entre eux, ayant une inclinaison (Z) par rapport à la normale (3) à ladite face support, ainsi qu'un pas d'espacement, correspondant aux valeurs désirées.

3. Procédé selon la revendication 1, caractérisé en ce que ledit enregistrement holographique est opéré de façon à produire des microvolets (21a—21n) d'inclinaison variable par rapport à la normale (3) à ladite face support, en sorte de former au moins un réseau convergent en un point de la normale.

4. Procédé selon l'une quelonque des revendications 1 à 3, caractérisé en ce que ledit enregistrement holographique est opéré de façon à produire deux réseaux de microvolets (2a—2n, 20a—20m) inclinés l'un par rapport à l'autre, les deux réseaux étant coplanaires dans ladite couche.

5. Procédé selon l'une quelconque des revendications précédentes, caractérisé en ce qu'il comporte, en outre, la production d'un moyen de filtrage spectral des ondes lumineuses dans une bande d'exploitation désirée, ce moyen de filtrage spectral étant obtenu par le choix du matériau de la plaque support ou par un dépôt approprié sur l'une des grandes faces de celle-ci.

6. Procédé selon l'une quelconque des revendications 1 à 4, caractérisé en qu'il comporte, en outre, la formation d'un dépôt formant miroir semi-réfléchissant (24) sur l'autre grande face de la plaque support (3).

7. Procédé selon la revendication 6, caractérisé en ce que le dépôt enregistré formant filtre directif est produit sur l'une des faces d'une première lame de verre constituant ladite plaque support (3) et dont l'autre face comporte ledit dépôt semi-reflechissant (24), et que le filtre directif se trouve monté en sandwich entre cette première lame et une deuxième lame (4) dont la face extérieure comporte un traitement anti-reflets (25).

8. Utilisation du procédé selon la revendication 6 ou 7 pour constituer un filtre directif destiné à équiper un indicateur cathodique de bord du type collimateur tête haute, de manière à superposer la vision d'une image collimatée reçue par réflexion sur le miroir semi-réfléchissant avec la vision du paysage extérieur à travers ce miroir et le filtre directif à microvolets, tout en préservant la qualité de cette visualisation simultanée sous forte ambiance lumineuse.

## Patentansprüche

1. Verfahren zur Herstellung eines ein gerichtetes Filter bildenden optischen Filters mit einer mindestens ein Netz von lichtundurchlässigen Mikrolamellen (2a bis 2n; 20a bis 20m; 21a bis 21n) tragenden durchsichtigen Platte (3), derart, daß die Sicht aufgrund eines Lichtdurchtritts durch das Filter auf ein Gesichtsfeld begrenzt ist, das vom Abstand (L) der Mikrolamellen und ihrer Höhe (H) in Durchgangsrichtung eingegrenzt wird, gekennzeichnet durch die folgenden Verfahrensschritte:

— Aufbringen einer lichtempfindlichen dicken Schicht (1) auf eine der großen Seiten der transparenten Trägerplatte (3); und
— Einschreiben eines Lichtpunktes in dieser Schicht (1) nach der Dickschicht-Holographietechnik mit Lichtdurchgang, so daß dort ein dickes Amplidudenhologramm mittels Lichtdurchgang gebildet wird, das aus mindestens einem Netz von lichtundurchlässigen Schichten besteht, die sich über eine Höhe (H) entsprechend der Dicke der Schicht erstrecken, wobei der Abstand (L) dieser Schichten deutlich größer als die Wellenlängen des sichtbaren Spektrums ist und wobei diese lichtundurchlässigen Schichten die Mikrolamellen (2a bis 2n; 20a bis 20m; 21a bis 21n) bilden.

2. Verfahren nach Anspruch 1, dadurch gekennzeichnet, daß das holographische Einschreiben so erfolgt, daß zueinander parallele Mikrolamellen (2a bis 2n; 20a bis 20m) erzeugt werden, die bezüglich der Normalen (z) zur Oberfläche des Trägers eine Neigung (Z) besitzen sowie einen gegenseitigen Abstand gemäß den gewünschten Werten.

3. Verfahren nach Anspruch 1, dadurch gekennzeichnet, daß das holographische Einschreiben so erfolgt, daß Mikrolamellen (21a bis 21n) mit variabler Neigung bezüglich der Normalen (z) zu der Oberfläche des Trägers entstehen, so daß mindestens ein konvergentes Netz in einem Punkt der Normalen entsteht.

4. Verfahren nach einem beliebigen der Ansprüche 1 bis 3, dadurch gekennzeichnet, daß das holographische Einschreiben so erfolgt, daß zwei Netze von Mikrolamellen (2a bis 2n; 20a bis 20m) entstehen, die unterschiedliche Neigungen besitzen, aber in der Schicht koplanar sind.

5. Verfahren nach einem beliebigen der vorhergehenden Ansprüche, dadurch gekennzeichnet, daß außerdem ein Mittel zur Spektralfilterung der Lichtwellen in einem gewünschten Betriebsfrequenzband erzeugt wird, und zwar durch Auswahl des Materials der Trägerplatte oder durch eine geeignete Schicht auf einer der großen Seiten dieser Platte.

6. Verfahren nach einem beliebigen der Ansprüche 1 bis 4, dadurch gekennzeichnet, daß außerdem eine einen halbreflektierenden Spiegel (24) bildende Schicht auf der anderen großen Oberfläche der Trägerplatte (3) erzeugt wird.

7. Verfahren nach Anspruch 6, dadurch gekennzeichnet, daß die beschriebene Schicht, die das Richtfilter bildet, auf einer der großen Oberflächen einer ersten Glasplatte ausgebildet wird, die die Trägerplatte (3) bildet, während die andere Oberfläche die halbreflektierende Schicht (24) trägt, und daß das gerichtete Filter in Sandwich-Bauweise zwischen dieser ersten Platte und einer zweiten Platte (4) montiert ist, deren äußere Oberfläche eine antireflektierende Behandlung erhält.

8. Verwendung des Verfahrens nach Anspruch 6 oder 7 zur Herstellung eines gerichteten Filters, das in einem kathodischen Bordindikator vom Typ Kopf-hoch-Kollimator Verwendung finden soll, in dem ein durch Reflektion am halbreflektierenden Spiegel kollimatiertes Bild mit dem Bild der äußeren Landschaft durch diesen Spiegel und das gerichtete Mikrolamellen-Filter hindurch überlagert wird, wobei die Güte dieser gleichzeitigen Sichtbarmachung auch bei großer Raumhelligkeit erhalten bleibt.

**Claims**

1. A method for the manufacture of a microlamellar optical filter constituting a directional filter of the type comprising a transparent plate (3) which bears at least one network of opaque microblades (2a—2n; 20a—20m; 21a—21n) arranged in in such a manner that the observation via light transmission through the filter is reduced to a field of inspection delimited by the mutual distance (L) of the microblades and their height (H) along the transmission direction, characterized by the following steps:

— coating of a photosensitive thick layer (1) on one of the large surfaces of said transparent plate (3), and

— holographic recording of a light point in said layer (1) according to the thick holography technique by transmission in such a way that a thick amplitude hologram by transmission is built, constituting at least one network of opaque strati extending over a height (H) corresponding to the thickness of the layer and having mutual spacings (L) which are substantially larger than the wave lenghts of the visible spectrum, said opaque strati constituting said microblades (2a—2n; 20a—20m; 21a—21n).

2. A method according to claim 1, characterized in that said holographic recording is made in such a way that mutually parallel microblades (2a—2n; 20a—20m) are produced showing an inclination (Z) with respect to the normal (z) to said support surface, as well as a mutual spacing corresponding to the desired values.

3. A method according to claim 1, characterized in that said holographic recording is realized in such a way that microblades (21—21n) of variable inclination with respect to the normal (z) are produced on said support surface in such a way that at least one network is build up which converges in one point of the normal.

4. A method according to any one of the claims 1 to 3, characterized in that said holographic recording is realized in such a manner that two networks of microblades (2a—2n; 20a—20m) are produced which are inclined one with respect to the other and which are coplanar in said layer.

5. A method according to any of the preceding claims, characterized in that it further comprises the production of a spectral filtering means for the light waves in a desired operational frequency band, this spectral filtering means being obtained by the material choice of the support plate or by an adequate layer one of the large surfaces of said plate.

6. A method according to any one of claims 1 to 4, characterized in that it further comprises the building up of a layer constituting a semi-reflecting mirror (24) on the other large surface of the support plate (3).

7. A method according to claim 6, characterized in that the recorded layer which builds up the directional filter is produced on one of the surfaces of a first glass lamina constituting said support plate (3), other surface of which comprises said semi-reflecting layer (24), and that the directional filter is mounted in a sandwich configuration between said first lamina and a second lamina (4), the outer surface of which comprises an anti-reflecting treatment (25).

8. The use of the method according to claim 6 or 7 for the realization of a directional filter conceived to be installed in an aircraft cathode tube indicator of the head-up-collimator type, in such a way, that the image of a collimated picture which has been received by reflection on the semi-reflecting mirror is superposed to the image of the outer landscape received through said mirror and the directional microlamellar filter, the quality of said simultaneous visualization under high ambient luminosity being preserved.

FIG_1

FIG_2

FIG_3

FIG_4

# FIG_5

# FIG_6

# FIG_7

# FIG_8

# FIG_9

# FIG_10

# FIG_11